# EUROPÄISCHE PATENTSCHRIFT

(11) **EP 3 036 468 B1**
(45) Veröffentlichungstag und Bekanntmachung des Hinweises auf die Patenterteilung: **10.10.2018**
(21) Anmeldenummer: 13770640.4
(22) Anmeldetag: 20.08.2013
(51) Int. Cl.: F16L 33/025, F16L 33/035

(54) **SCHLAUCHKLEMME**
HOSE CLAMP
COLLIER DE SERRAGE POUR TUYAU

(43) Veröffentlichungstag der Anmeldung: 29.06.2016
(73) Patentinhaber: Oetiker Schweiz AG, 8810 Horgen (CH)
(72) Erfinder: SEELOS, Robert, CH-8803 Rüschlikon (CH)
(74) Vertreter: Strehl Schübel-Hopf & Partner
(86) Internationale Anmeldenummer: PCT/EP2013/067312
(87) Internationale Veröffentlichungsnummer: WO 2015/024592

(56) Entgegenhaltungen:
- WO-A1-2013/060346
- CH-A5- 580 779
- DE-A1- 4 029 842
- DE-T2- 60 301 343

## Beschreibung

### Stand der Technik

Eine offene Schlauchklemme mit den im Oberbegriff des Anspruchs 1 angegebenen Merkmalen ist aus WO 2013/060346 A1 bekannt. Dort weist der innere Endabschnitt des Klemmbandes auf seiner Außenseite einen ersten gezahnten Bereich auf, der im gespannten Zustand der Schlauchklemme in einen an der Innenseite des äußeren Endabschnitts und auf der vom äußeren Klemmbandende abgewandten Seite einer ohrartigen Spanneinrichtung angeordneten zweiten gezahnten Bereich eingreift. Die ohrartige Spanneinrichtung dient nur zum Spannen der Schlauchklemme während der Montage, was automatisch oder manuell mit einem bei Ohrklemmen üblichen, beispielsweise zangenartigen Werkzeug erfolgen kann. Im montierten Zustand werden die beim Spannen erzielten Haltekräfte von den dann ineinandergreifenden Verzahnungen aufgenommen, während das Ohr von Kräften entlastet wird. Da die Verzahnung, die wie eine Verriegelung wirkt, außerhalb des Ohrbereichs angeordnet ist, vermag die montierte Schlauchklemme ihre Funktion selbst dann noch sicher auszuüben, wenn das nach außen ragende Ohr beschädigt wird.

### Abriss der Erfindung

Der Erfindung liegt die generelle Aufgabe zugrunde, die bekannte Schlauchklemme zu verbessern. Eine speziellere Aufgabe der Erfindung liegt darin, die zum Spannen der Klemme erforderliche Kraft zu verringern.

Die Lösung dieser Aufgabe gelingt mit der in Anspruch 1 definierten Schlauchklemme. Die danach vorgesehene Verringerung der Klemmbandbreite im Bereich der Spanneinrichtung wird durch die Tatsache ermöglicht, dass die Spanneinrichtung nur während der Montage ihre Funktion auszuüben hat, während im fertig montierten und gespannten Zustand die Haltekräfte von den Verzahnungen aufgebracht werden und die Spanneinrichtung entlastet ist. Aufgrund der reduzierten Breite im Bereich der Spanneinrichtung läßt sich der Spannvorgang mit entsprechend geringerer Kraft durchführen. Dies wiederum gestattet den Einsatz kleinerer Montagewerkzeuge.

Gleichzeitig werden unter Beibehaltung der Schließkraft im Vergleich zu einer Ohrklemme mit im Ohrbereich nicht reduzierter Klemmbandbreite effektiv höhere Kräfte auf den Umfang übertragen und somit die für die Dichtigkeit der Abbindung maßgeblichen Radialkräfte erhöht.

Bei der Anordnung nach Anspruch 4 ergibt sich der Vorteil, das für mehrere Schlauchklemmen unterschiedlicher Klemmbandbreite das gleiche Spannwerkzeug verwendet werden kann.

### Kurzbeschreibung der Zeichnung

Ein Ausführungsbeispiel der Erfindung wird nachstehend anhand der Zeichnung näher erläutert. Darin zeigen:
Fig. 1 eine perspektivische Darstellung einer Schlauchklemme im geschlossenen, aber noch nicht gespannten Zustand;
Fig. 2 und 3 perspektivische Darstellungen der Schlauchklemme nach Fig. 1 im gestreckten Zustand, gesehen von der im geschlossen Zustand inneren bzw. äußeren Klemmbandseite; und
Fig. 4 eine vergrößerte Draufsicht auf das äußere Bandende der Schlauchklemme nach Fig. 3.

### Ausführungsbeispiel

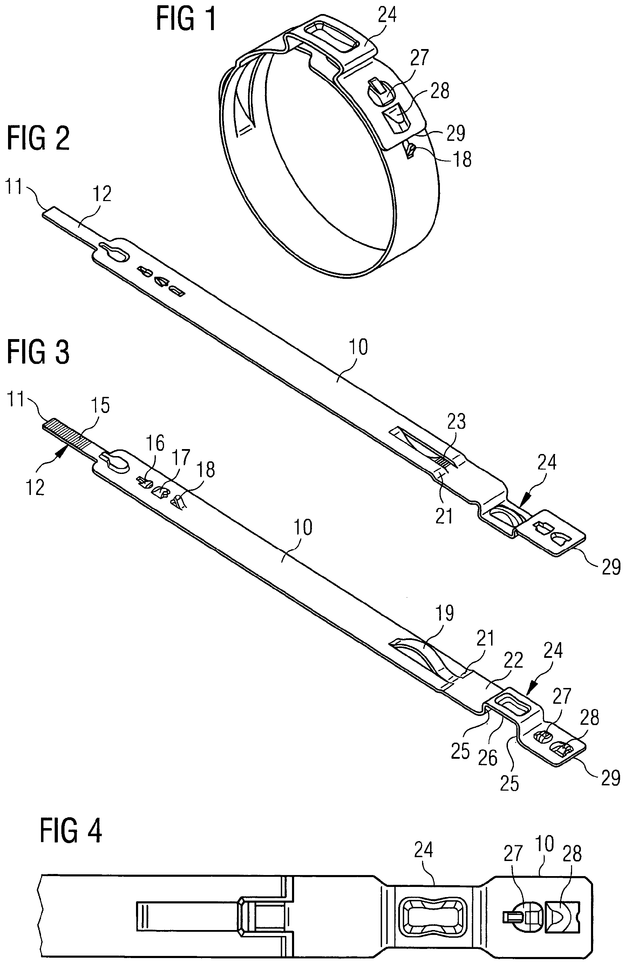

Die in der Zeichnung dargestellte Schlauchklemme besteht aus einem Klemmband **10**, das, ausgehend von dem in Fig. 2 und 3 links oben dargestellten Ende **11**, folgende Elemente aufweist: eine Zunge **12**, deren Breite geringer ist als die volle Breite des Klemmbandes **10**, auf der Zunge **12** ausgebildeten, in der Radialrichtung der geschlossenen Klemme nach außen weisenden ersten gezahnten Bereich **15**, einen Vorsprung in Form eines Stützhakens **16**, einen Führungshaken **17**, einen integrierten Sicherungshaken **18** gegen unbeabsichtigtes Öffnen der Klemme, einen aus dem Klemmband herausgewölbten Deckbereich **19**, einen mit einer Stufe **21** anschließenden erhabenen Bereich **22**, einen in der Radialrichtung der geschlossenen Klemme nach innen weisenden zweiten gezahnten Bereich **23**, eine Spanneinrichtung **24** in Form eines sogenannten "Oetiker-Ohrs" **24** mit zwei in der Radialrichtung nach außen verlaufenden Schenkeln **25** und einem deren äußere Enden verbindenden Steg **26**, eine eine Stützhakenaufnahme **27** bildende Vertiefung, eine Führungshakenaufnahme **28** und ein äußeres Klemmbandende **29**.

Der Stützhaken 16 ist mit einem längsgerichteten Führungssteg ausgeführt, der von einer in der Stützhakenaufnahme 27 ausgebildeten längsgerichteten Führungsstegaufnahme aufgenommen wird. Diese Gestaltung gewährleistet, dass die Zunge **12** auf den zweiten gezahnten Bereich **23** fluchtend ausgerichet wird. Andernfalls bestünde die Gefahr, dass die Zunge **12** bei der Montage nicht zentrisch in den zweiten gezahnten Bereich **23** einfahren würde.

Die im Lieferzustand geschlossene Schlauchklemme wird axial auf dem zu klemmenden Gegenstand, etwa einem Rohrnippel mit einem auf diesen aufgeschobenen Schlauchende, positioniert. Anschließend wird die Schlauchklemme durch Verengen des Ohrs **24** mit Hilfe eines automatischen oder manuellen Spannwerkzeugs, etwa einer an den beiden Schenkeln **25** ansetzenden Zange gespannt, wobei die beiden gezahnten Bereiche **15** und **23** in Eingriff gelangen. Dieser Eingriff bewirkt eine Verriegelung der Schlauchklemme im gespannten Zustand, in dem das nun außerhalb des Spannbereichs liegende Ohr **24** entlastet wird. Selbst eine Beschädigung des nach außen vorspringenden Ohrs hat dann keinen wesentlichen Einfluss mehr auf die Haltefunktion der Schlauchklemme.

Aus dem in Fig. 1 dargestellten geschlossenen Zustand der Schlauchklemme schiebt sich während des Spannvorgangs die Zunge **12** in den Abschnitt unter dem Deckbereich **19**, bis der anschließende Bereich voller Klemmbandbreite in die Nähe der Stufe **21** gelangt. In diesem Zustand ist der zu spannende Gegenstand im Wesentlichen über seinen gesamten Umfang lücken- und stufenlos von der vollen Bandbreite der Schlauchklemme umgeben.

Wie insbesondere aus Fig. 4 ersichtlich, ist die Breite des Klemmbandes im Bereich des Ohrs **24** gegenüber der vollen Bandbreite um mindestens 10%, vorzugsweise um 20%, verringert. Die verringerte Bandbreite bedeutet zwar eine Schwächung, die aber zulässig ist, weil das Ohr, wie oben erläutert, im fertig installierten Gebrauchszustand grundsätzlich entlastet ist. Andererseits bedingt die Verringerung der Bandbreite, dass zum Spannen und zur Erzielung einer gegebenen Durchmesserverringerung der Klemme, etwa mittels eines an den Schenkeln des Ohrs ansetzenden zangenartigen Spannwerkzeugs aufzubringen ist, eine kleinere Kraft ausreicht, als bei durchgehend gleicher Klemmbandbreite.

Typische Klemmbandbreiten sind 12 mm, 14 mm und 16 mm. Wird das Band bei allen diesen Schlauchklemmen im Ohrbereich 12 mm breit gemacht, so lässt sich für alle Schlauchklemmen das gleiche Spannwerkzeug einsetzen.

### Bezugszeichen

- **10**: Klemmband
- **11**: inneres Klemmbandende
- **12**: Zunge
- **15**: erster gezahnter Bereich
- **16**: Stützhaken
- **17**: Führungshaken
- **18**: Sicherungshaken
- **19**: Deckbereich
- **21**: Stufe
- **22**: erhabener Bereich
- **23**: zweiter gezahnter Bereich
- **24**: Ohr
- **25**: Schenkel
- **26**: Steg
- **27**: Stützhakenaufnahme
- **28**: Führungshakenaufnahme
- **29**: äußeres Klemmbandende

## Patentansprüche

1. Schlauchklemme aus einem Klemmband (**10**) mit einem inneren Endabschnitt und einem diesen überlappenden äußeren Endabschnitt, einer Schließeinrichtung (**16**, **17**, **27**, **28**), die die beiden Endabschnitte im geschlossenen Zustand der Schlauchklemme in gegenseitigem Eingriff hält, einer in dem Klemmband (**10**) vorgesehenen ohrartigen Spanneinrichtung (**24**) mit zwei nach außen ragenden Schenkeln (**25**) und einem diese verbindenden Steg (**26**), und einer Halteeinrichtung (**15**, **23**), die den inneren Endabschnitt des Klemmbandes (**10**) im gespannten Zustand der Schlauchklemme mit dem äußeren Endabschnitt auf der vom äußeren Klemmbandende (**29**) abgewandten Seite der Spanneinrichtung (**24**) in Eingriff hält,
**dadurch gekennzeichnet, dass** das Klemmband (**10**) im Bereich der Spanneinrichtung (**24**) eine geringere Breite hat als in seinem übrigen Bereich.

2. Schlauchklemme nach Anspruch 1, wobei die Breite des Klemmbandes (**10**) im Bereich der Spanneinrichtung (**24**) gegenüber der vollen Bandbreite um mindestens 10% verringert ist.

3. Schlauchklemme nach Anspruch 1 oder 2, wobei die Halteeinrichtung einen auf der Außenseite des inneren Endabschnitts des Klemmbandes (**10**) angeordneten ersten gezahnten Bereich (**15**) und einen an der Innenseite des äußeren Endabschnitts auf der vom äußeren Klemmbandende (**29**) abgewandten Seite der Spanneinrichtung (**24**) angeordneten zweiten gezahnten Bereich (**23**) aufweist, in den der erste gezahnte Bereich (**15**) im gespannten Zustand der Schlauchklemme eingreift.

4. Anordnung aus mehreren Schlauchklemmen nach einem der vorhergehenden Ansprüche, wobei das Klemmband (**10**) bei mindestens zwei Schlauchklemmen unterschiedliche Breite, im Bereich der Spanneinrichtung (**24**) jedoch bei allen Schlauchklemmen gleiche Breite hat.

5. Anordnung nach Anspruch 4 aus Schlauchklemmen, bei denen das Klemmband (**10**) Breiten von 14mm bzw. 16 mm hat und die Bandbreite im Bereich der Spanneinrichtung (**24**) bei allen Schlauchklemmen 12 mm beträgt.

## Claims

1. A hose clamp made of a clamping band (**10**) having an inner end section overlapped by an outer end section, a closure device (**16**, **17**, **27**, **28**) which in the closed condition of the hose clamp holds both end sections in mutual engagement, an ear-type tightening device (**24**) provided in the clamping band (**10**) and having two outward projecting legs (**25**) interconnected by a web (**26**), and a retaining device (**15**, **23**) which, in the tightened condition of the hose clamp, retains the inner end section of the clamping band (**10**) in engagement with the outer end section on the side of the tightening device (**24**) remote from the outer clamping band end (**29**),
**characterised in that** the clamping band (**10**) has a smaller width in the area of the tightening device (**24**) than elsewhere.

2. The hose clamp of claim 1 wherein, in the area of the tightening device (**24**), the width of the clamping band (**10**) is reduced by at least 10 per cent as compared to the full band width.

3. The hose clamp of claim 1 or 2 wherein the retaining device has a first toothed section (**15**) provided on the outer side of the inner end section of the clamping band (**10**) and a second toothed section (**23**) provided on the inner side of the outer end section on the side of the tightening device (**24**) remote from the outer clamping band end (**29**) and engaging the first toothed section (**15**) in the tightened condition of the hose clamp.

4. A set of a plurality of hose clamps in accordance with any preceding claim, wherein the clamping bands (**10**) of at least two hose clamps have different widths but the width in the area of the tightening device (**24**) is the same in all hose clamps.

5. The set of claim 4 including hose clamps the clamping bands (**10**) of which have widths of 14 mm and 16 mm, respectively, and all hose clamps have a band width of 12 mm in the area of the tightening device (**24**).

## Revendications

1. Collier de serrage pour tuyau constitué d'une bande de serrage (**10**) ayant une section d'extrémité intérieure chevauchée par une section d'extrémité extérieure, un dispositif de fermeture (**16**, **17**, **27**, **28**) qui, dans la condition fermée du collier de serrage, tient les deux sections d'extrémité en engagement mutuel, un dispositif de serrage (**24**) de type oreille prévu dans la bande de serrage (**10**) et ayant deux pattes (**25**) se projetant vers l'extérieur interconnectées par une bande (**26**), et un dispositif de maintien (**15**, **23**) qui, dans la condition serrée du collier de serrage, retient la section d'extrémité intérieure de la bande de serrage (**10**) en engagement avec la section d'extrémité extérieure sur le côté du dispositif de serrage (**24**) distant de l'extrémité extérieure (**29**) de bande de serrage,
**caractérisé en ce que** la bande de serrage (**10**) a une largeur dans la zone du dispositif de serrage (**24**) plus petite qu'ailleurs.

2. Collier de serrage selon la revendication 1 dans lequel, dans la zone du dispositif de serrage (**24**), la largeur de la bande de serrage (**10**) est réduite d'au moins 10 pour cent par comparaison avec la largeur complète de la bande.

3. Collier de serrage selon la revendication 1 ou 2 dans lequel le dispositif de retenue a une première section dentée (**15**) prévue sur le côté extérieur de la section d'extrémité intérieure de la bande de serrage (**10**) et une deuxième section dentée (**23**) prévue sur le côté intérieur de la section d'extrémité extérieure sur le côté du dispositif de serrage (**24**) distant de l'extrémité extérieure (**29**) de bande de serrage et engageant la première section dentée (**15**) dans la condition serrée du collier de serrage.

4. Ensemble d'une pluralité de colliers de serrage selon une quelconque revendication précédente, dans lequel les bandes de serrage (**10**) d'au moins deux colliers de serrage ont des largeurs différentes mais la largeur dans la zone du dispositif de serrage (**24**) est la même dans tous les colliers de serrage.

5. Ensemble selon la revendication 4 incluant des colliers de serrage dont les bandes de serrage (**10**) ont des largeurs de 14 mm et 16 mm, respectivement, et tous les colliers de serrage ont une largeur de bande de 12 mm dans la zone du dispositif de serrage (**24**).
